(19) Europäisches Patentamt
European Patent Office
Office européen des brevets

(11) **EP 2 650 202 B1**

(12) **EUROPÄISCHE PATENTSCHRIFT**

(45) Veröffentlichungstag und Bekanntmachung des Hinweises auf die Patenterteilung:
**19.10.2016   Patentblatt 2016/42**

(51) Int Cl.:
***B62M 6/45*** *(2010.01)*

(21) Anmeldenummer: **13155201.0**

(22) Anmeldetag: **14.02.2013**

(54) **Verfahren zur Regelung eines pedalgetriebenen Fahrzeugs und Regelungsvorrichtung**

Method for controlling a pedal-driven vehicle and control device

Procédé de régulation d'un véhicule à pédales et dispositif de régulation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2012   DE 102012206003**

(43) Veröffentlichungstag der Anmeldung:
**16.10.2013   Patentblatt 2013/42**

(73) Patentinhaber: **ROBERT BOSCH GMBH**
**70442 Stuttgart (DE)**

(72) Erfinder:
• **Dasbach, Gregor**
**72762 Reutlingen (DE)**
• **Schifferdecker, Daniel**
**72072 Tuebingen (DE)**
• **Schock, Wolfram**
**72768 Rommelsbach (DE)**
• **Widmaier, Georg**
**71296 Heimsheim (DE)**
• **Baumgaertner, Daniel**
**71665 Vaihingen (DE)**

(56) Entgegenhaltungen:
**DE-A1-102009 054 756     JP-A- 2004 142 634**
**JP-A- 2004 243 921     US-A1- 2006 095 191**

EP 2 650 202 B1

**Beschreibung**

Die Erfindung betrifft ein Verfahren zur Regelung eines pedalgetriebenen Fahrzeugs mit einer Antriebseinheit, umfassend einen Pedalantrieb und einen Motor als Unterstützungsantrieb. Die Erfindung betrifft außerdem eine Regelungsvorrichtung für ein derartiges Fahrzeug, sowie ein derartiges Fahrzeug mit einer Regelungsvorrichtung.

Stand der Technik

Bei Fahrzeugen mit einem Pedalantrieb und einem Motor als Unterstützungsantrieb, insbesondere bei einem Zweirad mit Unterstützungsantrieb (ein sogenanntes E-Bike oder Pedelec) wird unter einem normalen Fahrbetrieb verstanden, dass das Motordrehmoment, dem Pedaldrehmoment folgt. Es kann entweder proportional zum Pedaldrehmoment sein oder es unterstützt gemäß eines Mittelwertes oder einer Dämpfung näherungsweise konstant. In der Folge gibt es Drehmomentspitzen zu den Zeitpunkten, in denen der Fahrer die größte Kraft auf die Pedale aufbringt. Dies ist durchaus gewollt, da dadurch ein natürliches Fahrgefühl entsteht. Probleme treten dann auf, wenn das angetriebene Rad des Fahrzeugs den Reibkontakt zum Untergrund verliert. Es besteht die Gefahr, dass das Fahrzeug unkontrollierbar wird und der Fahrer infolgedessen die Fahrt unterbrechen muss oder im schlimmsten Fall sogar stürzt. Um dieser Gefahr zu begegnen, weisen derartige Fahrzeuge eine Antriebs-Schlupf Regelung auf.

Antriebs-Schlupf-Regelungen, auch als Traction Control bezeichnet, sind insbesondere für Motorräder weitgehend bekannt. Bei einem Fahrrad mit Unterstützungsantrieb, auch als E-Bike oder Pedelecs bezeichnet, steht diese Entwicklung noch am Anfang. Viele der von Motorrädern bekannten Methoden zur Erkennung und Vermeidung kritischen Schlupfs können ohne wesentliche Anpassungen auch beim E-Bike angewendet werden. Es ist beispielsweise möglich, aus der Differenz zwischen Vorderrad- und Hinterraddrehzahl oder Gradienten der Hinterraddrehzahl einen Zustand erhöhten Schlupfs zu erkennen und den Motor entsprechend abzuregeln oder einzelne Räder gezielt abzubremsen. Derartige Verfahren sind beispielsweise aus der JP 2004-142634 A und der JP 2004-243921A bekannt.

Ein derartiges Regelungsverfahren für Motorräder ist beispielsweise aus der EP 2409886 A2 bekannt. Hierbei wird bei einem herkömmlichen Motorrad mit Verbrennungsmotor eine Schlupfgröße aus aktuellen Kenngrößen des Motorrads, wie Motordrehzahl, Geschwindigkeit und Drehzahl der Räder bestimmt und mit einem veränderlichen Schwellwert verglichen. Bei Überschreiten des Schwellwerts, erfolgt eine Antriebs-Schlupf-Regelung. Dabei werden Kraftstoffzufuhr und/oder Luftzufuhr des Motors und/oder die Bremsen geregelt, bis ein Zielwert für die Schlupfgröße erreicht ist.

Ein wesentlicher Unterschied zwischen einem Pedelec bzw. E-Bike und einem Motorrad besteht darin, dass alternative Regelungsmethoden gerade nach der Erfassung eines erhöhten Schlupfes nötig sind. Dies ist dadurch bedingt, dass der Fahrer über das Aufbringen eigener Kräfte über das Pedal maßgeblich selbst bestimmt, ob ein kritischer Schlupf (weiterhin) auftritt oder nicht. Dies trifft im Allgemeinen für alle Fahrzeuge zu, die einen Pedalantrieb und einen Motor als Unterstützungsantrieb aufweisen. Diese Tatsache wird im Stand der Technik nicht berücksichtigt.

Den Stand der Technik nach dem Oberbegriff des Anspruchs 1 stellt hier den JP2004142634 dar. Offenbarung der Erfindung Erfindungsgemäß ist ein Verfahren zur Regelung eines pedalgetriebenen Fahrzeugs mit einer Antriebseinheit, umfassend einen Pedalantrieb und einen Motor als Unterstützungsantrieb vorgesehen, das folgende Schritte aufweist:

- Es wird eine Schlupfgröße erfasst, die von der Drehgeschwindigkeit eines angetriebenen Rads abhängt.
- Das Drehmoment, das von dem Motor ausgeübt wird (Motordrehmoment) wird erfasst.
- Das Drehmoment, das der Fahrer durch Pedalieren ausübt, auch als Pedaldrehmoment bezeichnet, wird erfasst.
- Die Antriebseinheit wird in Abhängigkeit von der erfassten Schlupfgröße geregelt, wobei vorgesehen ist, dass die Summe aus Motordrehmoment und Pedaldrehmoment in Abhängigkeit von der erfassten Schlupfgröße geregelt wird, dass, insbesondere wenn ein erhöhter Schlupfzustand vorliegt, Drehmomentspitzen ausgeglichen werden.

Durch das erfindungsgemäße Regelungsverfahren wird erzielt, dass die besonderen Gegebenheiten bei einem pedalgetriebenen Fahrzeug mit Unterstützungsmotor bei der Vermeidung von gefährlichen Situationen, die durch erhöhten Schlupf entstehen, berücksichtigt werden. Indem das vom Fahrer aufgebrachte Pedaldrehmoment bei der Regelung berücksichtigt und einbezogen wird, wird erreicht, dass gefährliche Situationen, etwa rutschiger Untergrund, schnell und sicher verlassen werden können. Die erfasste Schlupfgröße ist bevorzugt umso höher, je höher der Schlupf des Fahrzeugs ist.

Erfindungsgemäß ist ferner eine Regelungsvorrichtung für ein pedalgetriebenes Fahrzeugs mit einer Antriebseinheit, umfassend einen Pedalantrieb und einen Motor als Unterstützungsantrieb vorgesehen, die eingerichtet ist, eine derartige Regelung durchzuführen, sowie ein pedalgetriebenes Fahrzeug mit einer derartigen Regelungsvorrichtung.

Bevorzugt wird die Schlupfgröße erfasst, indem die Pedaldrehzahl erfasst wird. Die Pedaldrehzahl hängt unmittelbar mit der Drehgeschwindigkeit des angetriebenen Rads zusammen. Eine starke Änderung der Pedaldrehzahl in einem vorgegebenen Zeitintervall ist ein Hinweis darauf, dass ein erhöhter Schlupfzustand vorliegt, wobei unter einem erhöhten Schlupfzustand im Sinne der vorliegenden Erfindung ein Fahrzustand verstanden wird, in dem zu erwarten ist, dass ein angetriebenes Rad des Fahrzeugs den Reibkontakt zum Untergrund verliert oder den Reibkontakt bereits verloren hat. Insbesondere kann ein Schwellwert für die Änderungsrate der Pedaldrehzahl festgelegt sein, bei dessen Überschreiten ein erhöhter Schlupfzustand erkannt wird. Zur Erfassung der Pedaldrehzahl weist das Fahrzeug bevorzugt entsprechende Sensoren auf.

Alternativ oder zusätzlich kann die Schlupfgröße erfasst werden, indem als eine von der Drehgeschwindigkeit des angetriebenen Rads abhängige Größe die Motordrehzahl erfasst wird. Auch hier ist es zweckmäßig, eine Änderung der Motordrehzahl in einem vorgegebenen Zeitintervall zu bestimmen. Eine starke Änderung der Motordrehzahl in einem vorgegebenen Zeitintervall ist ebenfalls ein Hinweis dafür, dass ein erhöhter Schlupfzustand vorliegt. Diese Möglichkeit zur Erfassung der Schlupfgröße kann insbesondere bei Fahrzeugen mit Mittel- oder Heckmotor eingesetzt werden.

In beiden Ausführungsbeispielen kann bevorzugt in einem weiteren Schritt ein Vergleich der erfassten Schlupfgröße mit einem Schwellwert vorgesehen sein. Abhängig von dem Vergleich kann der aktuelle Schlupfzustand des angetriebenen Rads festgestellt werden, wobei insbesondere bei Überschreiten des Schwellwerts ein erhöhter Schlupfzustand erkannt wird und ansonsten ein normaler Schlupfzustand festgestellt wird.

Insbesondere bei Fahrzeugen, bei denen der Pedalantrieb und/oder der Motor ein Getriebe aufweist, kann der Schwellwert abhängig von einer aktuellen Getriebestellung festgelegt sein.

In einer bevorzugten Ausführung der Erfindung umfasst das Erkennen eines erhöhten Schlupfzustands einen Plausibilisierungsschritt. Der Plausibilisierungsschritt sieht vor, bei der Erfassung der Schlupfgröße zusätzliche Messgrößen mit einzubeziehen, um so die Wahrscheinlichkeit eines korrekten Erkennens eines erhöhten Schlupfzustands zu verbessern. Beispielsweise kann eine starke Änderung der Pedaldrehzahl in einem vorgegebenen Zeitintervall ein Hinweis auf einen erhöhten Schlupfzustand sein, es kann aber auch andere Ursachen geben. Beispielsweise kann beim Anfahren - vor allem in kleinen Gängen - eine starke Änderung der Pedaldrehzahl auftreten, ohne dass ein erhöhter Schlupfzustand vorliegt. Um diese Situation von einem tatsächlichen erhöhten Schlupfzustand zu unterscheiden, können in einem Plausibilisierungsschritt eine oder mehrere zusätzliche Messgrößen erfasst werden. Wenn die zusätzlich erfassten Messgrößen ebenfalls auf einen erhöhten Schlupfzustand schließen lassen, ist die Wahrscheinlichkeit groß, dass tatsächlich ein erhöhter Schlupfzustand vorliegt.

In einer besonders bevorzugten Ausführung der Erfindung umfasst der Plausibilisierungsschritt eine Erfassung des Pedaldrehmomentverlaufs und/oder der Beschleunigung des Fahrzeugs in Fahrtrichtung. Dazu weist das Fahrzeug entsprechende Sensoren auf.

Wenn ein erhöhter Schlupfzustand erfindungsgemäß erkannt wurde, wird die Antriebseinheit des Fahrzeugs bevorzugt derart geregelt, dass eine Erfassung der Änderung der Pedaldrehzahl und/oder der Änderung der Drehzahl eines angetriebenen Rads und des durchschnittlichen Gesamtdrehmoments erfolgt. Das Fahrzeug weist dazu entsprechende Sensoren auf.

Zur Regelung wird bevorzugt eine Schlupfkennzahl SK in Abhängigkeit der erfassten Größen berechnet. Die Schlupfkennzahl SK erlaubt Rückschlüsse auf den aktuellen Reibwert zwischen Reifen des Fahrzeugs und dem Untergrund. Treten beispielsweise schon bei geringer eingebrachter Energie ins System hohe Drehzahlen am angetriebenen Rad auf, so kann man darauf schließen, dass die eingebrachte Energie weniger zu einer Beschleunigung des gesamten Fahrzeugs sondern mehr zu einer alleinigen Beschleunigung des Hinterrads aufgrund eines erhöhten Schlupfs geführt hat. Die Energie die ins System eingebracht wurde wird beschrieben durch das Gesamtdrehmoment, die Beschleunigung des angetriebenen Rad wird durch die Änderung der Pedaldrehzahl repräsentiert. Die Schlupfkennzahl SK kann also beispielsweise als Quotient

$$SK = \frac{Durchschnittliches\ Gesamtdrehmoment}{Pedaldrehzahländerung}$$

berechnet werden.

Die Regelung der Antriebseinheit erfolgt bevorzugt abhängig von der berechneten Schlupfkennzahl SK. Eine größere Schlupfkennzahl SK lässt auf einen eher griffigen Untergrund schließen, da viel Drehmoment aufgebracht werden muss, um einen erhöhten Schlupf zu erzeugen. Eine kleinere SK bedeutet, dass bereits bei wenig eingebrachtem Drehmoment ein erhöhter Schlupfzustand auftreten kann. Für die Regelung gilt, je niedriger die SK, desto weniger Drehmoment sollte durch die Regelung am angetriebenen Rad bereitgestellt werden. Somit kann ein weiteres Auftreten eines erhöhten Schlupfzustands vermieden werden.

Zusätzlich oder alternativ kann vorgesehen sein, dass die Steigung und/oder die Untergrundbeschaffenheit durch entsprechende Sensoren erfasst werden und die Schlupfkennzahl (SK) abhängig von der erfassten Steigung und/oder Untergrundbeschaffenheit bestimmt wird. Die erfasste Untergrundbeschaffenheit kann beispielsweise Informationen über die Feuchtigkeit, Material- und/oder Reibungseigenschaften des Untergrunds umfassen. Diese Größen können bei der Regelung des Antriebs berücksichtigt werden und bestimmen beispielsweise die Dämpfung und/oder einen Richtwert für das Gesamtdrehmoment des Fahrzeugs.

Zusätzlich kann die SK angepasst derart werden, dass wenn trotz nachfolgend vorgeschlagener Regelung ein weiteres Durchrutschen des angetriebenen Rads oder ein weiterer Traktionsverlust auftritt, die SK mit einem Faktor kleiner 1 multipliziert wird.

Um insbesondere möglichst schnell und sicher einen erhöhten Schlupfzustand zu verlassen wird erfindungsgemäß die Antriebseinheit des Fahrzeugs derart geregelt, dass die Summe aus Motordrehmoment und Pedaldrehmoment (Gesamtdrehmoment) dass, insbesondere dann, wenn ein erhöhter Schlupfzustand vorliegt, Drehmomentspitzen ausgeglichen werden. Unter Drehmomentspitzen sollen kurzzeitige Schwankungen des Gesamtdrehmoments verstanden werden, die in einem normalen Fahrzustand auftreten und durchaus gewünscht sein können. Durch das Ausgleichen derartiger Schwankungen bzw. Drehmomentspitzen in einem erhöhten Schlupfstand wird vermieden, dass das Fahrzeug weiterhin den Reibkontakt zum Untergrund verliert.

Insbesondere wird dies erreicht, indem das Motordrehmoment antizyklisch zu dem Pedaldrehmoment geregelt wird. Das bedeutet, dass der Motor gerade dann ein höheres Drehmoment erbringt, wenn durch den Fahrer gerade wenig Drehmoment ausgeübt wird und dass der Motor dann wenig Drehmoment beiträgt, wenn der Fahrer ein hohes Drehmoment (Pedaldrehmoment) ausübt. Damit wird erreicht, dass die Summe aus Motordrehmoment und Pedaldrehmoment einen flachen bzw. homogenen Verlauf, mit höchstens geringen Schwankungen aufweist.

In einer bevorzugten Weiterentwicklung der Erfindung kann vorgesehen sein, dass Summe aus Pedaldrehmoment und Motordrehmoment derart geregelt wird, dass bei einem erhöhten Pedaldrehmoment von dem Motor ein negatives Motordrehmoment ausgeübt wird. Dies kann beispielsweise realisiert werden, indem der Motor als Generator und somit als aktive Bremse betrieben wird. Zu Zeiten in denen der Fahrer ein großes Pedaldrehmoment ausübt kann der Motor also ein entgegengesetztes Drehmoment bereitstellen. Damit kann nicht nur ein flacher, wenig Drehmomentspitzen aufweisender Verlauf des Gesamtdrehmoments erzielt werden, sondern das Gesamdrehmoment derart geregelt werden, dass beispielsweise ein vorbestimmtes maximales Gesamtdrehmoment nicht überschritten wird und/oder der Verlauf des Gesamtdrehmoments einem vorgegebenen Verlauf angepasst wird.

Bei Fahrzeugen in denen der Pedalantrieb eine automatische Gangschaltung umfasst, kann die erfindungsgemäße Antriebsregelung derart ausgebildet sein, dass zusätzlich oder alternativ zu einer Regelung des Motors die automatische Gangschaltung derart geregelt wird, dass Schwankungen des Gesamtdrehmoments ausgeglichen werden.

Bevorzugt weist ein erfindungsgemäß ausgebildetes, pedalgetriebenes Fahrzeug einen oder mehrere Sensoren zur Erfassung des Motordrehmoments und/oder der Pedaldrehzahl und/oder des Pedaldrehmoments und/oder der Beschleunigung in Fahrtrichtung und/oder des Gesamtdrehmoments und/oder der Drehzahl eines angetriebenen Rads auf. Die erfassten Sensorsignale werden bevorzugt einer Regelvorrichtung zugeführt. Die Schlupfgröße wird bevorzugt abhängig von einem oder mehreren der Sensorsignale erfasst und die Regelung erfolgt abhängig von den erfassten Sensorsignalen.

Bevorzugt umfasst das Fahrzeug außerdem einen oder mehrere Sensoren zur Erfassung der Untergrundbeschaffenheit, insbesondere einen Neigungssensor. Die Neigung und die Beschaffenheit des Untergrunds, wie beispielsweise die Bodenfeuchtigkeit, Rauhigkeit oder gegebenenfalls vorhandenes Geröll, Schnee oder Eis haben einen direkten Einfluss auf den Schlupf des Fahrzeugs. Eine Erfassung von Größen die diese Einflüsse repräsentieren und Einbeziehung dieser Größe in die erfindungsgemäße Regelung hilft demnach, eine erhöhte Schlupfsituation schnell und zuverlässig zu bewältigen.

Es versteht sich, dass die voranstehend genannten und die nachstehend noch zu erläuternden Merkmale nicht nur in der jeweils angegebenen Kombination, sondern auch in anderen Kombinationen oder auch in Alleinstellung verwendbar sind, ohne den Rahmen der vorliegenden Erfindung zu verlassen.

Kurze Beschreibung der Zeichnungen

Figur 1 zeigt ein Flussdiagramm einer Erkennung eines erhöhten Schlupfzustands nach einem ersten Ausführungsbeispiel der Erfindung.

Figur 2 zeigt beispielhafte Zeitverläufe der Pedaldrehzahl und des Pedaldrehmoments bei einem erhöhten Schlupfzustand.

Figur 3 zeigt ein Flussdiagramm einer Erkennung eines erhöhten Schlupfzustands nach einem zweiten Ausführungsbeispiel der Erfindung.

Figur 4 zeigt beispielhafte Zeitverläufe der Motordrehzahl und der Beschleunigung des Fahrzeugs in Fahrtrichtung bei einem erhöhten Schlupfzustand.

Figur 5 zeigt ein Flussdiagramm eines Verfahrens zur Regelung einer Antriebseinheit nach einem Ausführungsbeispiel der Erfindung.

Figur 6 zeigt beispielhafte Zeitverläufe des Gesamtdrehmoments, des Pedaldrehmoments und des Motordrehmoments während der Durchführung eines erfindungsgemäßen Verfahrens wie in Figur 5 dargestellt.

Figur 7 zeigt ein Flussdiagramm eines Verfahrens zur Regelung einer Antriebseinheit nach einem alternativen Ausführungsbeispiel der Erfindung.

Figur 8 zeigt beispielhafte Zeitverläufe des Gesamtdrehmoments, des Pedaldrehmoments und des Motordrehmoments während der Durchführung eines erfindungsgemäßen Verfahrens wie in Figur 7 dargestellt.

Figur 9 zeigt ein Flussdiagramm eines Verfahrens zur Regelung einer Antriebseinheit bei einem Fahrzeug mit einer automatischen Gangschaltung nach einem alternativen Ausführungsbeispiel der Erfindung.

Figur 10 zeigt beispielhafte Zeitverläufe der Pedaldrehzahl und des von der automatischen Gangschaltung eingelegten Gangs während der Durchführung eines erfindungsgemäßen Verfahrens wie in Figur 9 dargestellt.

Figur 11 zeigt schematisch ein Fahrrad mit einer erfindungsgemäßen Regelvorrichtung.

Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

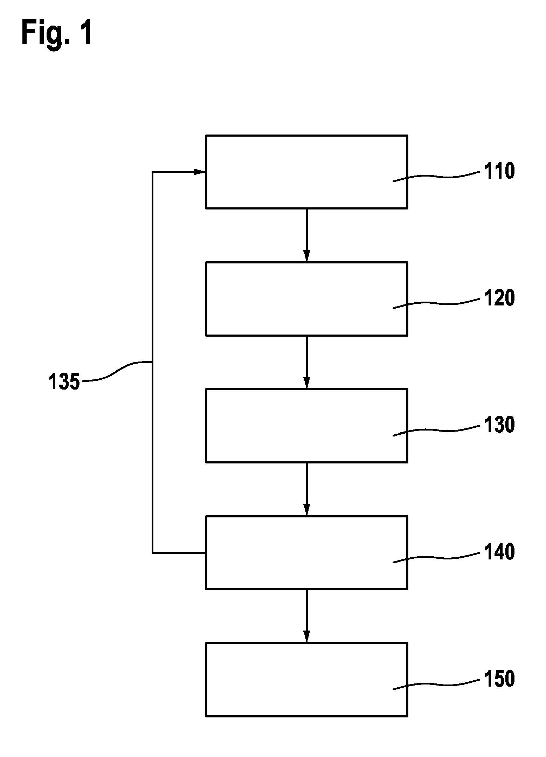

In Figur 1 sind die Verfahrensschritte zur Erkennung eines erhöhten Schlupfzustands bei einem als Elektrofahrrad (auch als E-Bile oder Pedelec bezeichnet) ausgebildeten Fahrzeug nach einem ersten Ausführungsbeispiel der Erfindung dargestellt. Zur Erfassung des aktuellen Schlupfzustands wird in diesem Beispiel im ersten Schritt 110 die Änderung der Pedaldrehzahl $\Delta n$ über einen bestimmten Zeitraum $\Delta t$, oder mit anderen Worten, die Pedalbeschleunigung

$$\dot{n} = \frac{\Delta n}{\Delta t}$$ gemessen. Wie unmittelbar einsichtig ist hängt die Pedalbeschleunigung $\dot{n}$ mit der Umdrehungsgeschwindigkeit des angetriebenen Rads zusammen. Die Pedalbeschleunigung $\dot{n}$ bildet also in diesem Ausführungsbeispiel die erfindungsgemäße Schlupfgröße. Alternativ ist es denkbar, die Pedalbeschleunigung über einen Gyro am Rad (Drehbeschleunigungssensor) direkt zu detektieren.

Die gemessene Pedalbeschleunigung wird in Schritt 120 mit einem vorgegebenen Schwellwert $S_P$ verglichen. Der Schwellwert $S_P$ kann konstant oder veränderlich vorgegeben sein. Beispielsweise kann der Schwellwert $S_P$ bei einem Elektrofahrrad, das ein Getriebe aufweist, abhängig von dem zu diesem Zeitpunkt vorliegenden Übersetzungsverhältnis zwischen Pedalantrieb und dem angetriebenen Rad (eingelegter Gang) definiert sein. Wenn die gemessene Pedalbeschleunigung $\dot{n}$ den Schwellwert $S_P$ überschreitet, lässt dies darauf schließen, dass ein erhöhter Schlupfzustand vorliegen kann. Unter einem erhöhten Schlupfzustand im Sinne der vorliegenden Erfindung wird ein Fahrzustand des Fahrzeugs verstanden, in dem zu erwarten ist, dass das Fahrzeug den Reibkontakt zum Untergrund verliert oder in dem das Fahrzeug den Reibkontakt bereits verloren hat.

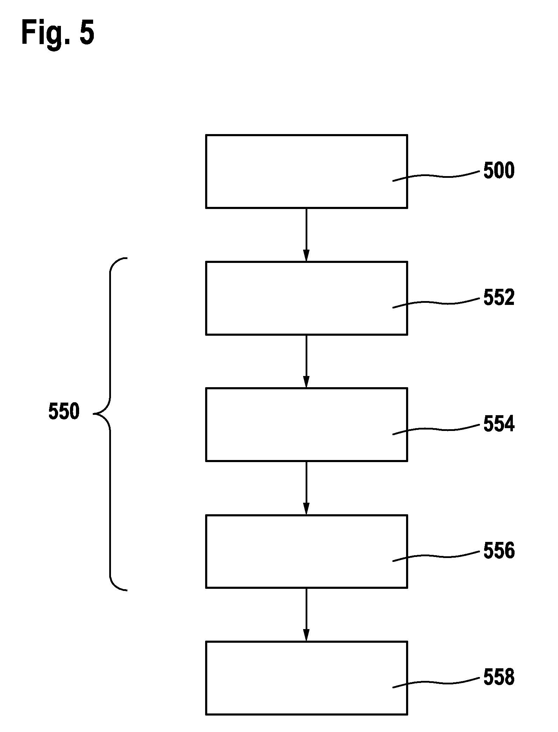

Um sicherzustellen, dass tatsächlich ein erhöhter Schlupfzustand vorliegt erfolgt im Anschluss an Schritt 120 ein Plausibilisierungsschritt 130. Ziel des Plausibilisierungsschrittes 130 ist es, andere, unkritische Fahrzustände, die ebenfalls zu einer erhöhten Pedalbeschleunigung führen können, zu überprüfen und auszuschließen. In diesem Beispiel erfolgt der Plausibilisierungsschritt 130 durch die Erfassung des vom Fahrer ausgeübten Drehmoments (Pedaldrehmoment). Alternativ oder zusätzlich können zur Plausibilisierung auch andere Größen erfasst werden, wie beispielsweise die Beschleunigung des Fahrzeugs in Fahrtrichtung. In Schritt 140 wird geprüft, ob aus der Kombination der in 110 erfassten Pedalbeschleunigung und aus dem im Plausibilisierungsschritt 130 erfassten Pedaldrehmoment auf einen erhöhten Schlupfzustand geschlossen werden muss. Ergibt es sich, dass kein erhöhter Schlupfzustand vorliegt, erfolgt kein Eingriff in die Antriebsregelung. Wie durch den Pfeil 135 angedeutet wird die Überwachung der Pedalbeschleunigung in Schritt 110 fortgesetzt. Ist das Ergebnis in Schritt 140, dass ein erhöhter Schlupfzustand vorliegt, erfolgt im nächsten Schritt 150 eine entsprechende Regelung der Antriebseinheit, beispielsweise wie mit Bezug auf eine der Figuren 5 bis 10 beschrieben.

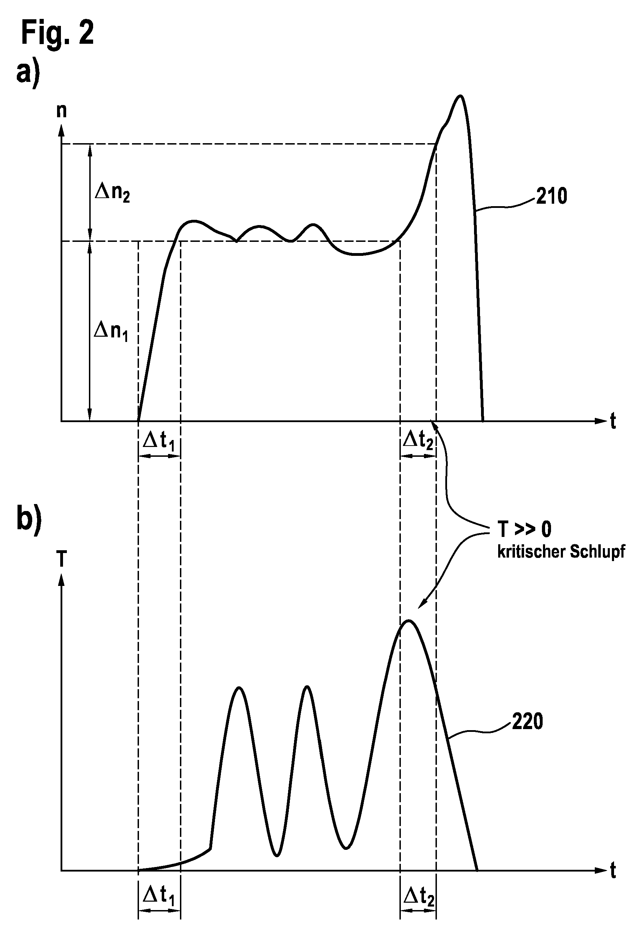

In Figur 2 sind beispielhaft Zeitverläufe der Pedaldrehzahl und des Pedaldrehmoments dargestellt, um das Prinzip der Erkennung und Plausibilisierung eines erhöhten Schlupfzustands gemäß den Schritten 110 bis 140 zu verdeutlichen. In Figur 2 a) ist der zeitliche Verlauf 210 der Pedaldrehzahl n dargestellt; in Figur 2 b) ist der zeitliche Verlauf 220 des Pedaldrehmoments $T$ dargestellt. Zu Beginn der Fahrt wird in einem ersten Intervall $\Delta t_1$ eine relativ

große Änderung der Pedaldrehzahl $\Delta n_1$ festgestellt. Die Pedalbeschleunigung $\dot{n}_1 = \dfrac{\Delta n_1}{\Delta t_1}$ liegt über einem definierten Schwellwert $S_P$. Zur Überprüfung (Plausibilisierung), ob tatsächlich ein erhöhter Schlupfzustand vorliegt, wird zusätzlich der Verlauf des Pedaldrehmoments $T$ im Intervall $\Delta t_1$ betrachtet. Es wird festgestellt, dass sich das Pedaldrehmoment *T im* Intervall $\Delta t_1$ nur geringfügig ändert, insbesondere werden keine Einbrüche des Pedaldrehmoments T im Intervall $\Delta t_1$ *beobachtet.* Daraus wird erkannt, dass im Intervall $\Delta t_1$ kein erhöhter Schlupfzustand vorliegt, obwohl die Pedalbeschleunigung $\dot{n}_1$ oberhalb des Schwellwerts $S_P$ liegt.

Im weiteren Verlauf der Fahrt bleibt die Pedaldrehzahl $n$ zunächst bis auf kleine Schwankungen konstant. Im Intervall $\Delta t_2$ wird erneut eine Änderung der Pedaldrehzahl $\Delta n_2$ festgestellt $\dot{n}_2 = \dfrac{\Delta n_2}{\Delta t_2}$ festgestellt, die den Schwellwert $S_P$ überschreitet. Die Betrachtung Verlaufs des Pedaldrehmoments $T$ im Intervall $\Delta t_2$ ergibt, dass auch das Pedaldrehmoment $T$ im Intervall $\Delta t_2$ eine große Änderung erfährt, insbesondere ist ein starker Einbruch des Pedaldrehmoment $T$ zu beobachten. Daraus wird erkannt, dass im Intervall $\Delta t_2$ tatsächlich ein erhöhter Schlupfzustand vorliegt. Gemäß Schritt 150 greift nun eine entsprechende Regelung der Antriebseinheit, beispielsweise wie mit Bezug auf eine der Figuren 5 bis 10 beschrieben.

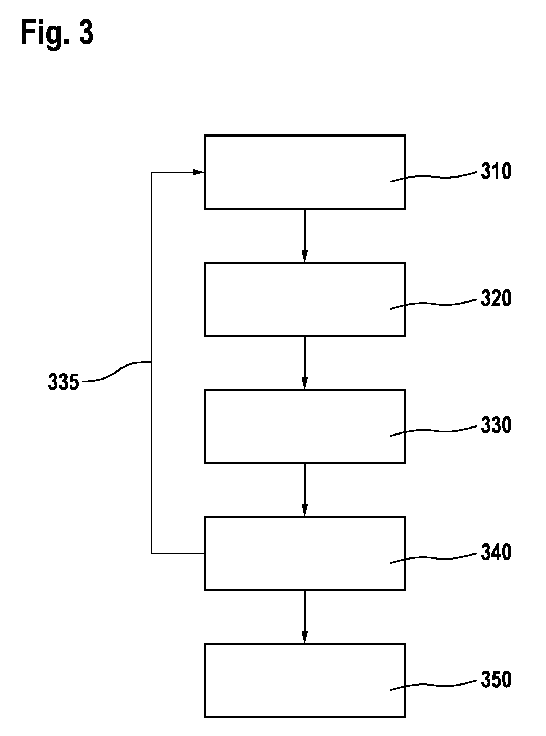

In Figur 3 sind die Verfahrensschritte zur Erkennung eines erhöhten Schlupfzustands bei einem als Elektrofahrrad ausgebildeten Fahrzeug nach einem zweiten Ausführungsbeispiel der Erfindung dargestellt. Zur Erkennung eines erhöhten Schlupfzustands wird in diesem Ausführungsbeispiel in einem ersten Schritt 310 als Schlupfgröße die Änderung $\Delta n_{mot}$ der Drehzahl des Unterstützungsmotors über einen bestimmten Zeitraum $\Delta t$, die Motorbeschleunigung

$$\dot{n}_{mot} = \frac{\Delta n_{mot}}{\Delta t} \text{ gemessen.}$$

Die gemessene Motorbeschleunigung $\dot{n}_{mot}$ wird in Schritt 320 mit einem definierten Schwellwert $S_M$ verglichen. Der Schwellwert $S_M$ kann beispielsweise konstant vorgegeben sein, oder bei einem Fahrzeug bei dem die Antriebseinheit ein Getriebe aufweist, abhängig von dem zu diesem Zeitpunkt eingelegten Gang definiert sein.

Wenn die gemessene Motorbeschleunigung $\dot{n}_{mot}$ den Schwellwert $S_M$ überschreitet, kann dies ein Hinweis darauf sein, dass ein erhöhter Schlupfzustand vorliegt.

Um sicherzustellen, dass tatsächlich ein erhöhter Schlupfzustand vorliegt, erfolgt im Anschluss an Schritt 320 ein Plausibilisierungsschritt 330. Ziel des Plausibilisierungsschrittes 330 ist es, andere, unkritische Fahrzustände, die ebenfalls zu einer erhöhten Motorbeschleunigung führen können, zu überprüfen. In diesem Beispiel erfolgt der Plausibilisierungsschritt 330 durch die Messung der Beschleunigung a des Fahrzeugs in Fahrtrichtung. In Schritt 340 wird geprüft, ob aus der Messung der Motorbeschleunigung (Schritte 310 und 320) und aus dem Ergebnis des Plausibilisierungsschritts 330 auf einem erhöhten Schlupfzustand geschlossen werden muss. Ergibt sich, dass kein erhöhter Schlupfzustand vorliegt, erfolgt in diesem Beispiel kein Eingriff in die Antriebsregelung. Wie durch den Pfeil 335 angedeutet wird die Erfassung der Motorbeschleunigung in Schritt 310 fortgesetzt. Ergibt sich jedoch, dass ein erhöhter Schlupfzustand vorliegt, erfolgt im nächsten Schritt 350 eine entsprechende Regelung der Antriebseinheit, beispielsweise wie mit Bezug auf die Figuren 5 bis 10 beschrieben.

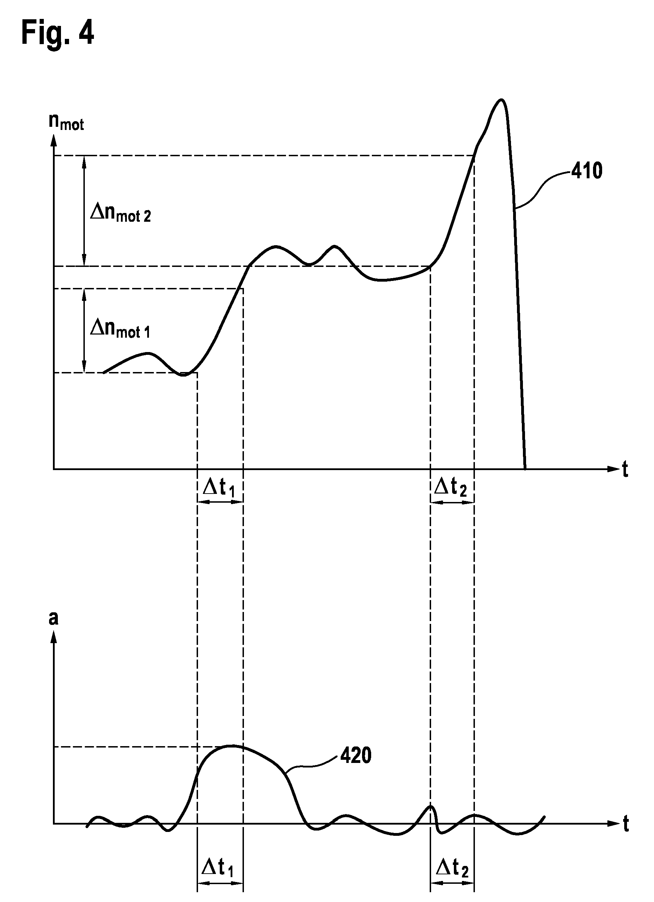

In Figur 4 sind beispielhaft Zeitverläufe der Motordrehzahl $n_{mot}$ und der Beschleunigung a des Fahrzeugs in Fahrtrichtung dargestellt, um das Prinzip der Erkennung und Plausibilisierung eines erhöhten Schlupfzustands gemäß der Schritte 310 bis 340 zu verdeutlichen. In Figur 4 a) ist der zeitliche Verlauf 410 der Motordrehzahl $n_{mot}$ dargestellt; in Figur 4 b) ist der zeitliche Verlauf 420 Beschleunigung a des Fahrzeugs in Fahrtrichtung dargestellt. Zu Beginn der Fahrt wird in einem ersten Intervall $\Delta t_1$ eine Änderung der Motor $\Delta n_{mot1}$ festgestellt. Die Motorbeschleunigung

$$\dot{n}_{mot1} = \frac{\Delta n_{mot1}}{\Delta t_1}$$ liegt über einem definierten Schwellwert. Zur Überprüfung (Plausibilisierung), ob tatsächlich ein erhöhter Schlupfzustand vorliegt, wird zusätzlich die Beschleunigung a des Fahrzeugs im Intervall $\Delta t_1$ betrachtet. Es wird festgestellt, dass im Intervall $\Delta t_1$ eine Beschleunigung a vorliegt, die deutlich größer als Null, beispielsweise größer als ein definierter Schwellwert, ist. Daraus lässt sich schließen, dass im Intervall $\Delta t_1$ kein erhöhter Schlupfzustand vorliegt.

Im weiteren Verlauf der Fahrt bleibt die Motordrehzahl $n_{mot}$ zunächst bis auf kleine Schwankungen konstant. Im Intervall $\Delta t_2$ wird erneut eine relativ große Änderung der Motordrehzahl $\Delta n_{mot2}$ festgestellt, so dass die Motorbeschleunigung oberhalb des definierten Schwellwerts liegt. Die Betrachtung der Beschleunigung a des Fahrzeugs im Intervall $\Delta t_2$ ergibt, dass trotz der hohen Motorbeschleunigung keine deutliche Beschleunigung a des Fahrzeugs in Fahrtrichtung vorliegt. Auch hier kann beispielsweise ein Vergleich der durchschnittlichen Beschleunigung im Intervall $\Delta t_2$ mit einem definierten Schwellwert vorgenommen werden. Daraus lässt sich schließen, dass im Intervall $\Delta t_2$ ein

erhöhter Schlupfzustand vorliegt.

In der Figur 5 ist nun ein Beispiel für eine erfindungsgemäße Regelung 550 der Antriebseinheit eines als Elektrofahrrad ausgebildeten Fahrzeugs in Abhängigkeit einer Schlupfgröße dargestellt, nachdem ein erhöhter Schlupfzustand festgestellt wurde. Im ersten Schritt 500 erfolgt die Erkennung eines erhöhten Schlupfzustands, beispielsweise durch eine der Methoden, die in den Figuren 1 bis 4 erläutert wurden. Nach der Erkennung, dass ein erhöhter Schlupfzustand vorliegt, wird im nächsten Schritt 552 das Motordrehmoment, das von einem Motor als Unterstützungsantrieb auf das Fahrzeug ausgeübt wird, auf null oder einen Wert nahe Null reduziert. Im folgenden Schritt 554 wird das Pedaldrehmoment, das nun im Wesentlichen dem Gesamtantriebsdrehmoment, das auf das Fahrzeug ausgeübt wird, entspricht, erfasst. Im Schritt 556 setzt die Antriebsregelung ein, die in diesem Beispiel das Motordrehmoment antizyklisch zu dem Pedaldrehmoment regelt. Es wird demnach dann das Motordrehmoment erhöht, wenn sich das Pedaldrehmoment verringert und umgekehrt das Motordrehmoment verringert, wenn sich das Pedaldrehmoment erhöht. Dadurch wird erzielt, dass das Gesamtdrehmoment, also die Summe aus dem Motordrehmoment und dem Pedaldrehmoment, homogenisiert wird, also einen flachen Verlauf, ohne Spitzen oder Einbrüche aufweist. Dadurch wird erreicht, dass die Wahrscheinlichkeit eines weiteren Traktionsverlust des angetriebenen Rades verringert wird. Gleichzeitig kann aber der Fahrer dennoch schnell und sicher über unwegsames, steiles und rutschiges Gebiet kommen, da er vom Motor genau dann Unterstützung bekommt, wenn der Fahrer selbst wenig Drehmoment aufbringt. Insbesondere bei einem Zweirad hat der Fahrer damit stets genug Geschwindigkeit um sein Gleichgewicht zu halten. Das Risiko eines erneuten Traktionsverlust ist geringer, da im Vergleich zu einem Fahrbetrieb, ohne antizyklische Antriebsregelung, Drehmomentspitzen nicht ausgeprägt sind.

Die antizyklische Regelung wird solange beibehalten, bis in Schritt 558 kein erhöhter Schlupfzustand mehr erfasst wird und demnach ein normaler Fahrbetrieb wieder aufgenommen werden kann. Dabei kann beispielsweise das antizyklisch zum Pedaldrehmoment eingebrachte Motormoment nach und nach gedämpft werden, so dass nach wenigen Kurbelumdrehungen wieder in den normalen Fahrbetrieb mit entsprechender Motorunterstützung übergegangen wird.

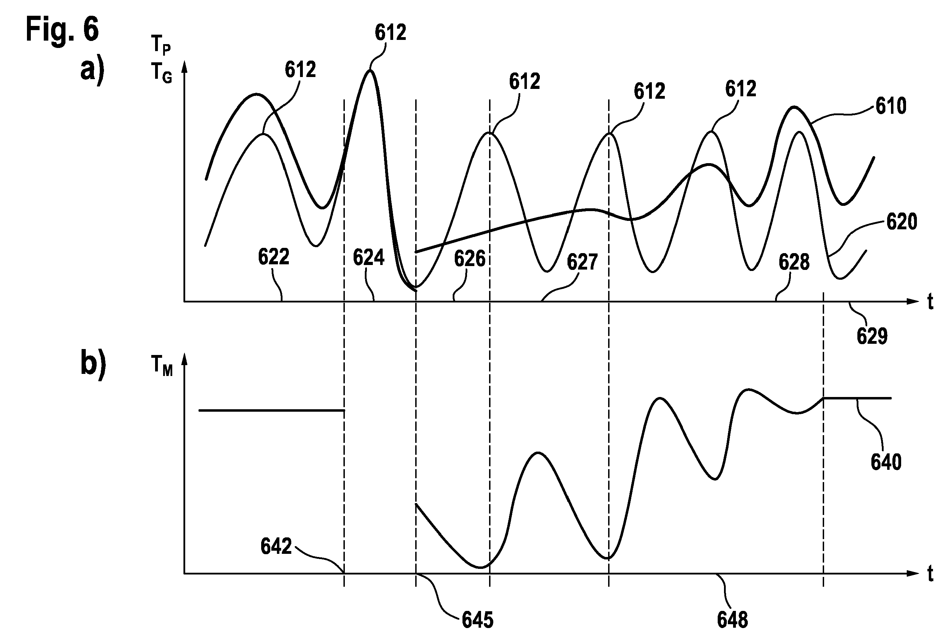

In Figur 6 sind beispielhaft Zeitverläufe des Gesamtdrehmoments, des Pedaldrehmoments und des Motordrehmoments dargestellt, um das Prinzip der antizyklischen Regelung des Antriebs bei einem erhöhten Schlupfzustands gemäß den Schritten 552 bis 558 zu verdeutlichen. In Figur 6 a) ist der zeitliche Verlauf 610 des Gesamtdrehmoments $T_G$, sowie der zeitliche Verlauf 620 des Pedaldrehmoments $T_P$ dargestellt; in Figur 6 b) ist der zeitliche Verlauf 640 des Motordrehmoments $T_M$ dargestellt. Das Pedaldrehmoment 620 verläuft in etwa sinusförmig, entsprechend dem Tretverhalten des Fahrers und weist ausgeprägte Drehmomentspitzen 612 auf.

Im Intervall 622 herrscht kein erhöhter Schlupfzustand. Die Schlupfgröße, die beispielsweise mittels einer der in den Figuren 1 bis 4 erläuterten Methoden erfasst werden kann, liegt unterhalb eines vorgegebenen Schwellwerts. In diesem Intervall herrscht eine sogenannte normale Fahrsituation, das Motordrehmoment $T_M$ wird konstant gehalten. Zum Zeitpunkt 642 überschreitet die erfasste Schlupfgröße den vorgegebenen Schwellwert, ein Zustand erhöhten Schlupfs wird erfasst. Nun setzt die Antriebsregelung ein. Zunächst wird gemäß Schritt 552 das Motordrehmoment auf einen Wert nahe Null reduziert. Während des Intervalls 624, das beispielsweise ungefähr einer Pedalumdrehung entspricht, wird das Gesamtdrehmoment im Wesentlichen durch das Pedaldrehmoment bestimmt. Zum Zeitpunkt 645, in dem ein Minimum des Pedaldrehmoments erfasst wird, setzt der Motor wieder ein und wird in den folgenden Intervallen 626 und 627 derart geregelt, dass das Motordrehmoment antizyklisch zum Pedaldrehmoment verläuft. Damit wird erreicht, dass das Gesamtdrehmoment 620 keine ausgeprägten Drehmomentspitzen aufweist, sondern glatt und homogen verläuft. Dadurch wird die Gefahr, dass das angetrieben Rad den Reibkontakt zum Untergrund verliert, reduziert.

Zum Zeitpunkt 648 wird bei der Erfassung der Schlupfgröße festgestellt, dass kein erhöhter Schlupfzustand mehr vorliegt. Die antizyklische Regelung des Motors wird im Folgenden für die Dauer des Intervalls 628 gedämpft, bis im Intervall 629 wieder ein normaler Fahrbetrieb, gekennzeichnet durch ein konstantes Motordrehmoment, aufgenommen wird.

Die Festlegung der Dauer der Intervalle 626, 627 und 628 und der Homogenisierung der Drehmomentspitzen kann in Abhängigkeit der oben entwickelten SK erfolgen. So können bevorzugt bei kleinem SK, was eine hohe Anfälligkeit für erhöhten Schlupf andeutet, die Intervalle länger gewählt werden und die antizyklische Unterstützung kann vorsichtiger, d. h. geringer erfolgen als bei einem höheren SK.

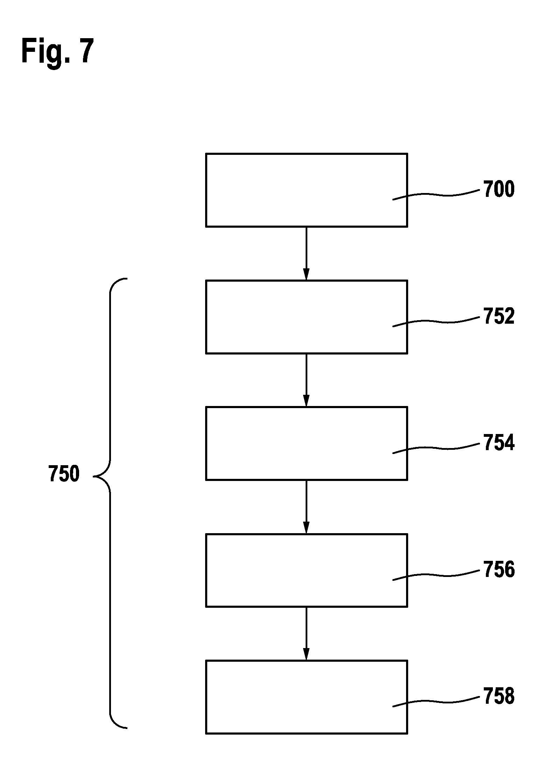

In der Figur 7 ist ein alternatives Beispiel für eine erfindungsgemäße Regelung 750 der Antriebseinheit eines als Elektrofahrrad ausgebildeten Fahrzeugs in Abhängigkeit einer Schlupfgröße dargestellt, nachdem ein erhöhter Schlupfzustand festgestellt wurde. Im ersten Schritt 700 erfolgt, analog zum Beispiel aus Figur 5, die Erkennung eines erhöhten Schlupfzustands, beispielsweise durch eine der Methoden, die in den Figuren 1 bis 4 erläutert wurden. Nach der Erkennung, dass ein erhöhter Schlupfzustand vorliegt, wird im nächsten Schritt 752 der Motor derart geregelt, dass ein negatives Motordrehmoment ausgeübt wird. Unter einem negativen Motordrehmoment wird ein Drehmoment verstanden, dass eine dem Pedaldrehmoment entgegengesetzte Richtung aufweist und demzufolge bremsend wirkt. Dazu kann der Motor, im beispielhaften Fall, dass es sich um einen Elektromotor handelt, in einen Generatorbetrieb umgeschaltet werden. Alternativ kann der Motor aktiv gebremst werden. Im folgenden Schritt 754 wirkt das Pedaldrehmoment erfasst. Im Schritt 756 setzt eine Antriebsregelung ein, die ähnlich zum Beispiel aus Figur 5 das Motordrehmoment antizyklisch zu dem Pedaldrehmoment regelt, wobei jedoch auch weiterhin zumindest zeitweise ein negatives Motordrehmoment wirken kann. Dadurch wird erzielt, dass das Gesamtdrehmoment, also die Summe aus dem Motordrehmoment und dem Pedaldrehmoment, homogenisiert wird, also einen flachen Verlauf, ohne Spitzen oder Einbrüche aufweist.

Dadurch, dass da Motordrehmoment auch negativ sein kann, wird eine schnellere Homogenisierung des Gesamtdrehmoments erzielt und es kann ein insgesamt niedrigeres Gesamtdrehmoment erreicht werden, als beispielsweise bei einer Regelung gemäß Figur 5. Es kann damit beispielsweise auch ein bestimmtes, der Situation angepasstes, Zielgesamtdrehmoment vorgegeben werden, dem sich der Antrieb durch die beschriebene antizyklische Regelung annähert. Das vorgegebene Zielgesamtdrehmoment kann beispielsweise abhängig von erfassten Größen, die den Untergrund im Bezug auf Steigung und/oder Feuchtigkeit beschreiben, vorgegeben sein. Dazu kann insbesondere eine sogenannte Schlupfkennzahl errechnet werden, in deren Abhängigkeit die antizyklische Regelung des Motors erfolgt. Die antizyklische Regelung wird so lange beibehalten, bis in Schritt 758 kein erhöhter Schlupfzustand mehr erfasst wird und demnach ein normaler Fahrbetrieb wieder aufgenommen werden kann.

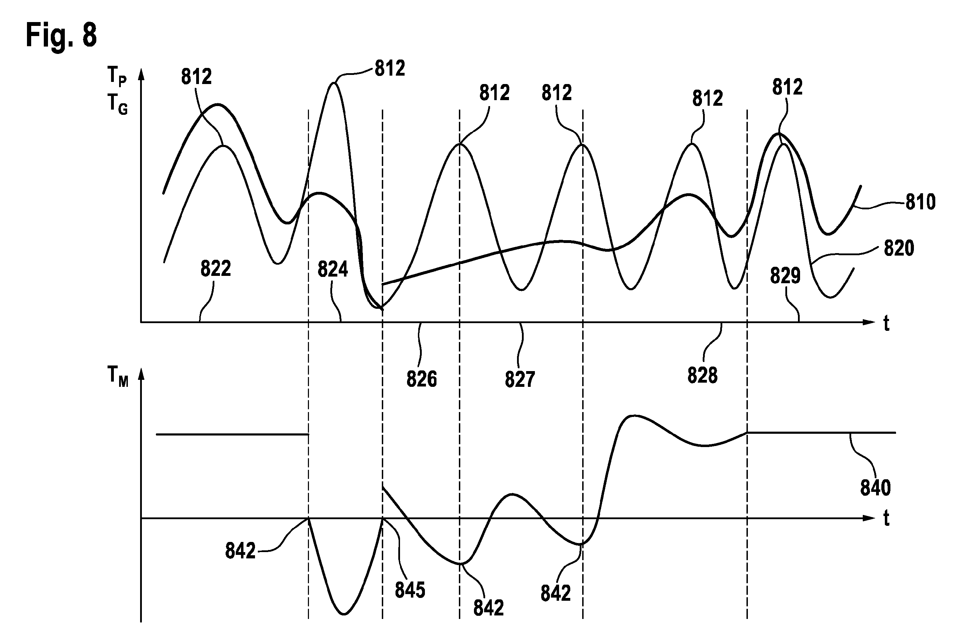

In Figur 8 sind beispielhaft Zeitverläufe des Gesamtdrehmoments, des Pedaldrehmoments und des Motordrehmoments dargestellt, um das Prinzip der antizyklischen Regelung des Antriebs bei einem erhöhten Schlupfzustands gemäß den Schritten 752 bis 758 zu verdeutlichen. In Figur 8 a) ist der zeitliche Verlauf 810 des Gesamtdrehmoments $T_G$, sowie der zeitliche Verlauf 820 des Pedaldrehmoments $T_P$ dargestellt; in Figur 8 b) ist der zeitliche Verlauf 840 des Motordrehmoments $T_M$ dargestellt. Das Pedaldrehmoment verläuft in etwa sinusförmig, entsprechend dem Tretverhalten des Fahrers und weist ausgeprägte Drehmomentspitzen 812 auf.

Im Intervall 822 liegt die die Schlupfgröße, die beispielsweise mittels einer der in den Figuren 1 bis 4 erläuterten Methoden erfasst werden kann, unterhalb eines vorgegebenen Schwellwerts. Es liegt demnach kein erhöhter Schlupfzustand vor. In diesem Intervall herrscht eine sogenannte normale Fahrsituation, das Motordrehmoment $T_M$ wird konstant gehalten. Zum Zeitpunkt 842 überschreitet die erfasste Schlupfgröße den vorgegebenen Schwellwert, ein Zustand erhöhten Schlupfs wird erfasst. Nun setzt die Antriebsregelung ein. Zunächst wird während des Intervalls 824 gemäß Schritt 852 das Motordrehmoment derart geregelt, dass es dem Pedaldrehmoment entgegenwirkt. Zum Zeitpunkt 845, in dem ein Minimum des Pedaldrehmoments erfasst wird, setzt eine antizyklische Regelung des Motors ein. Der Motor wird in den folgenden Intervallen 826 und 827 derart geregelt, dass das Motordrehmoment antizyklisch zum Pedaldrehmoment verläuft, wobei weiterhin auch ein negatives Motordrehmoment 842 ausgeübt werden kann, vor allem dann, wenn beim Pedaldrehmoment 820 Drehmomentspitzen 812 auftreten. Damit wird erreicht, dass das Gesamtdrehmoment 820 keine ausgeprägten Drehmomentspitzen aufweist, sondern glatt und homogen verläuft. Dadurch wird die Gefahr, dass das angetrieben Rad den Reibkontakt zum Untergrund verliert, reduziert.

Zum Zeitpunkt 848 wird bei der Erfassung der Schlupfgröße festgestellt, dass kein erhöhter Schlupfzustand mehr vorliegt. Die antizyklische Regelung des Motors wird im Folgenden für die Dauer des Intervalls 828 gedämpft, bis im Intervall 829 wieder ein normaler Fahrbetrieb, gekennzeichnet durch ein konstantes Motordrehmoment, aufgenommen wird.

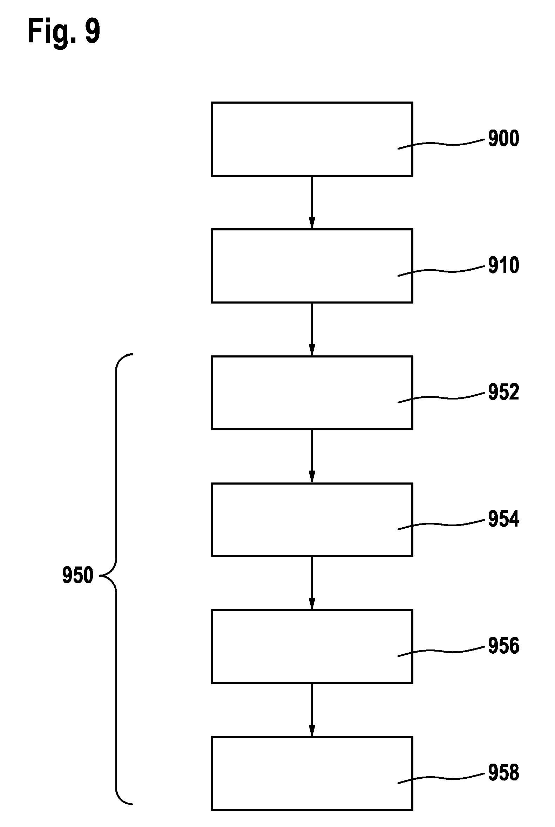

In der Figur 9 ist ein alternatives Beispiel für eine erfindungsgemäße Regelung 950 der Antriebseinheit eines als Elektrofahrrad ausgebildeten Fahrzeugs in Abhängigkeit einer Schlupfgröße dargestellt, nachdem ein erhöhter Schlupfzustand festgestellt wurde. Dieses Ausführungsbeispiel ist bei Fahrzeugen mit einer automatischen Gangschaltung anwendbar. Dabei kann es sich beispielsweise um eine stufenlose automatische Gangschaltung oder um eine automatische Naben-, Ketten- und Getriebeschaltung handeln. Im normalen Fahrbetrieb 900 wird die automatische Gangschaltung in bekannter Weise derart geregelt, dass stets eine vom Fahrer gewünschte Pedaldrehzahl (Trittfrequenz) beibehalten werden kann. Ob ein normaler Fahrbetrieb vorliegt wird erfindungsgemäß durch Erfassung einer Schlupfgröße erkannt. In Schritt 910 erfolgt, analog den vorangegangen Beispielen, die Erkennung eines erhöhten Schlupfzustands, beispielsweise durch eine der Methoden, die in den Figuren 1 bis 4 erläutert wurden. Nach der Erkennung, dass ein erhöhter Schlupfzustand vorliegt, wird im nächsten Schritt 952 die automatische Gangschaltung derart geregelt, dass ein weiterer Traktionsverlust des angetriebenen Rades verhindert wird. Dies wird dadurch erreicht, dass zunächst ein weiteres Erhöhen des Übersetzungsverhältnisses (Hochschalten) zum Zeitpunkt des Traktionsverlustes verhindert wird. Damit wird vermieden, dass zu hohe Drehzahlen am angetriebenen Rad auftreten, durch die ein Verlust des Reibkontakts begünstigt wäre. Im nächsten Schritt 954 wird auf ein erneutes Einsetzen des Pedalierens durch den Fahrer gewartet. Um im Folgenden zu Verhindern, dass zu hohe Kräfte am Hinterrad auftreten, wird in Schritt 956 ein, im Bezug auf das Schaltverhalten im normalen Betrieb, erhöhter Gang eingelegt. Das Übersetzungsverhältnis wird nun über einen bestimmten Zeitraum langsam wieder reduziert, bis in Schritt 958 ein dem normalen Fahrbetrieb entsprechendes Übersetzungsverhältnis vorliegt. Der Zeitraum über den das überhöhte Übersetzungsverhältnis anliegt wird durch die erfasste Schlupfgröße bestimmt. Durch Berechnung und Einbeziehung einer Schlupfkennzahl, in die auch erfasste Umgebungsgrößen, wie beispielsweise Untergrundbeschaffenheit, Feuchte oder Neigung des Untergrunds eingehen können, kann die Regelung der automatischen Gangschaltung weiter verbessert werden.

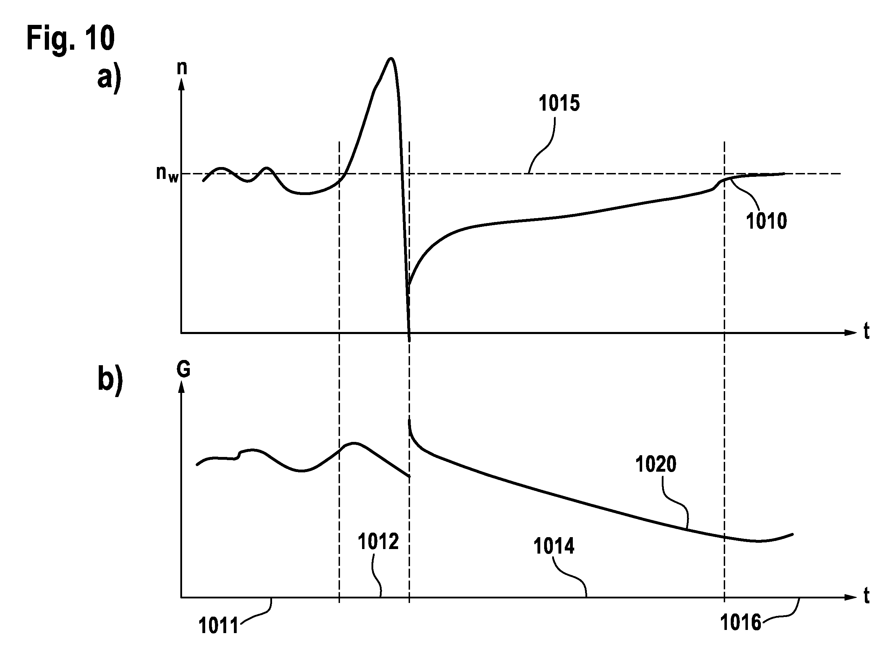

In Figur 10 sind beispielhaft Zeitverläufe der Pedaldrehzahl und des Übersetzungsverhältnisses einer stufenlosen automatischen Gangschaltung gezeigt, Regelung der automatischen Gangschaltung bei einem erhöhten Schlupfzustands gemäß den Schritten 952 bis 958 zu verdeutlichen. In Figur 10 a) ist der zeitliche Verlauf 1010 der Pedaldrehzahl n dargestellt. Die vom Fahrer gewählte Wunschpedaldrehzahl $n_W$ ist als gestrichelte Linie 1015 dargestellt. in Figur 10 b) ist der zeitliche Verlauf 1020 des Übersetzungsverhältnisses der stufenlosen automatischen Gangschaltung dargestellt.

Zu Beginn, im Intervall 1011 befindet sich das Fahrzeug in einem normalen Fahrzustand. Die Pedaldrehzahl n entspricht im Wesentlichen der Wunschpedaldrehzahl $n_W$, es treten lediglich geringe Schwankungen auf. Im Intervall 1012 wird das Eintreten eines erhöhten Schlupfzustands festgestellt. Die Pedaldrehzahl steigt innerhalb des Intervalls 1012 stark an, was wie im Bezug auf die Figuren 1 und 2 beschrieben auf einen erhöhten Schlupf hindeutet. Die automatische Gangschaltung wird nun derart geregelt dass ein weiteres Erhöhen des Übersetzungsverhältnisses verhindert wird, um zu vermeiden, dass zu hohe Drehzahlen am angetriebenen Rad auftreten. Stattdessen wird in der hier beispielhaft gezeigten Regelung das Übersetzungsverhältnis sogar leicht verringert. In Folge wird die Pedaldrehzahl wieder sinken, wobei am Ende des Intervalls 1012 ein Minimum der Pedaldrehzahl n erfasst wird. Um die Gefahr eines erhöhten Schlupfzustands auch weiterhin gering zu halten, wird im Intervall 1014 die automatische Gangschaltung derart geregelt, dass die Pedaldrehzahl n unterhalb der Wunschpedaldrehzahl $n_W$ bleibt und sich dieser langsam annähert, bis im Intervall 1020 ein normaler Fahrbetrieb aufgenommen wird. Die beschriebene Regelung der automatischen Gangschaltung bewirkt in diesem Beispiel, dass ein homogenes Gesamtdrehmoment auf das Fahrzeug ausgeübt wird. Der Motor kann zusätzlich geregelt werden um diesen Effekt zu unterstützen, beispielsweise durch eine zum Pedaldrehmoment antizyklische Regelung, wie im Zusammenhang mit den Figuren 5 bis 8 beschrieben ist.

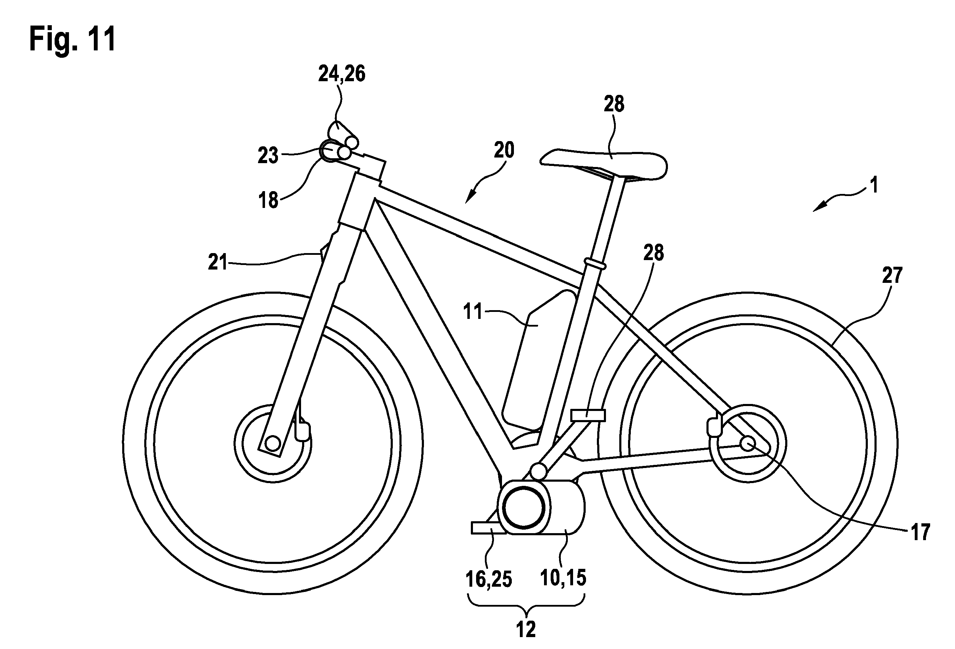

In Figur 11 ist schematisch ein Fahrrad 1 mit einem Pedalantrieb 25 und einem Elektromotor 10 als Unterstützungsantrieb dargestellt. Der Pedalantrieb 25 und der Elektromotor 10 bilden zusammen eine Antriebseinheit 12. Das Fahrrad 1 ist als Elektrofahrrad mit Mittelmotor ausgebildet. Der Elektromotor 10 ist hier also im Bereich des Tretlagers angeordnet. Eine Batterie 11 ist am Sattelrohr 21 des Rahmens 20 oberhalb des Motors 10 montiert und dient als Stromversorgung für den Motor 10. Alternativ kann der Motor auch als Nabenmotor am Hinter-oder Vorderrad angeordnet sein,

Das Fahrrad 1 weist eine Regelungsvorrichtung 24 auf, die beispielsweise als Elektronisches Steuergerät ausgebildet ist und die geeignet ist, den Elektromotor bzw. das von dem Elektromotor ausgeübte Motordrehmoment zu regeln. Die Regelungsvorrichtung 24 ist in diesem Beispiel in einen Fahrradcomputer 26 integriert, der am Lenker 23 des Fahrrads 1 angeordnet ist. Alternativ kann die Regelungsvorrichtung auch an der Antriebseinheit 12 oder der Batterie oder am Rahmen 20 angeordnet sein. Das Fahrrad 1 kann auch eine automatische Gangschaltung aufweisen (nicht dargestellt), wobei die Regelungsvorrichtung 24 zusätzlich geeignet sein kann, die automatische Gangschaltung zu regeln.

Weiterhin weist das Fahrrad 1 verschiedene Sensoren 15, 16, 17, 18 zur Erfassung des Motordrehmoments, des Pedaldrehmoments, der Pedaldrehzahl, der Beschleunigung des Fahrrads 1 und der Drehzahl des angetriebenen Rades auf. Der Sensor 15 zur Erfassung des Motordrehmoments ist in den Motor 10 integriert, Der Sensor 16 zur Erfassung des Pedaldrehmoments ist in den Pedalantrieb 25 integriert. Alternative Anordnungen sind denkbar, beispielsweise können Sensoren zur Erfassung des Pedaldrehmoments auch an den Pedalen 28 angeordnet sein. Ein Sensor 17 zur Erfassung der Raddrehzahl ist am Hinterrad 27 angeordnet. Ein weiterer Sensor 18, der in diesem Beispiel am Lenker 23 angeordnet ist, erfasst die Beschleunigung des Fahrzeugs. Der Sensor 18 kann alternativ auch an anderen Stellen des Fahrrads 1 angeordnet sein, beispielsweise am Rahmen 20, an der Batterie 11 oder an oder in der Antriebseinheit 12. Geeignete Ausführungen für die Sensoren 15, 16, 17, 18 sind dem Fachmann bekannt, beispielsweise können die Sensoren 15, 16, 17, 19 als Hall-Sensoren, Zusätzlich können auch Sensoren 21 an dem Fahrrad 1 angeordnet sein, die die Neigung und Beschaffenheit des Untergrunds erfassen. Dabei kann es sich beispielsweise um Neigungssensoren, Ultraschallsensoren, Drucksensoren oder optische Sensoren handeln.

Die von den Sensoren 15, 16, 17, 18, 21 erfassten Messwerte werden der Regelungsvorrichtung 24 über entsprechenden Leitungen (nicht dargestellt) zugeführt und werden in die Regelung der Antriebseinheit 12 einbezogen.

Die mit Bezug auf die Figuren 1 bis 11 beschriebene Erfindung ist durch für einen Fachmann einfach durchzuführende Anpassung auch für andere pedalgetriebene Fahrzeuge mit Unterstützungsmotor einsetzbar. In Frage kommen beispielsweise motorisierte Drei- oder Vierräder (z. B. Liegerad).

**Patentansprüche**

1. Verfahren zur Regelung eines pedalgetriebenen Fahrzeugs (1) mit einer Antriebseinheit (12), umfassend einen Pedalantrieb (25) und einen Motor (10) als Unterstützungsantrieb, mit folgenden Schritten:

   - Erfassen einer Schlupfgröße in Abhängigkeit von der Drehgeschwindigkeit eines angetriebenen Rads,
   - Erfassen des Motordrehmoments (640, 840),
   - Erfassen des Pedaldrehmoments (620, 820)

- Regelung der Antriebseinheit in Abhängigkeit von der erfassten Schlupfgröße, wobei vorgesehen ist, dass die Summe (610, 810) aus Motordrehmoment und Pedaldrehmoment in Abhängigkeit von der erfassten Schlupfgröße geregelt wird,

**dadurch gekennzeichnet, dass** die Summe (610, 810) aus Motordrehmoment (640, 840) und Pedaldrehmoment (620, 820) derart geregelt wird, dass, insbesondere wenn ein erhöhter Schlupfzustand vorliegt, Drehmomentspitzen (612, 812) ausgeglichen werden.

2. Verfahren nach Anspruch 1, **dadurch gekennzeichnet, dass** die Schlupfgröße erfasst wird, indem als eine die Drehgeschwindigkeit des angetriebenen Rads bestimmende Größe die Pedaldrehzahl (n) erfasst wird, und eine Änderung der Pedaldrehzahl ($\Delta n$) in einem vorgegebenen Zeitintervall ($\Delta t$) bestimmt wird ($\dot{n}$).

3. Verfahren nach Anspruch 1, **dadurch gekennzeichnet, dass** die Schlupfgröße erfasst wird indem eine Änderung der Pedaldrehzahl über einen Drehratensensor (Gyro) an einem Rad direkt gemessen wird.

4. Verfahren nach einem der Ansprüche 1 bis 3, **dadurch gekennzeichnet, dass** die Schlupfgröße erfasst wird, indem als eine von der Drehgeschwindigkeit des angetriebenen Rads abhängige Größe die Motordrehzahl ($n_{mot}$) erfasst wird, und eine Änderung der Motordrehzahl ($\Delta n_{mot}$) in einem vorgegebenen Zeitintervall ($\Delta t$) bestimmt wird ($\dot{n}_{mot}$).

5. Verfahren nach einem der Ansprüche 1 bis 4, **dadurch gekennzeichnet, dass** in einem weiteren Schritt (120, 320) ein Vergleich der Schlupfgröße mit einem Schwellwert ($S_P$) vorgesehen ist, wobei in Abhängigkeit von dem Vergleich ein Schlupfzustand eines angetriebenen Rads festgestellt wird, wobei insbesondere bei Überschreiten des Schwellwerts ($S_P$) ein erhöhter Schlupfzustand erkannt wird und ansonsten ein normaler Schlupfzustand festgestellt wird.

6. Verfahren nach Anspruch 5, **dadurch gekennzeichnet, dass** die Antriebseinheit (12), insbesondere der Pedalantrieb (25) und/oder der Motor (10), ein Getriebe aufweist und der Schwellwert ($S_P$) abhängig von einer Getriebestellung festgelegt ist.

7. Verfahren nach einem der Ansprüche 5 oder 6, **dadurch gekennzeichnet, dass** das Erkennen eines erhöhten Schlupfzustands einen Plausibilisierungsschritt (130, 330) umfasst.

8. Verfahren nach Anspruch 7, **dadurch gekennzeichnet, dass** im Plausibilisierungsschritt (130, 330) eine Erfassung

   - des Pedaldrehmomentverlaufs (220) und/oder
   - der Beschleunigung (420) des Fahrzeugs in Fahrtrichtung vorgesehen ist.

9. Verfahren nach einem der Ansprüche 5 bis 8, **dadurch gekennzeichnet, dass** bei der Feststellung eines erhöhten Schlupfzustands, eine Erfassung

   - der Änderung der Pedaldrehzahl und/oder
   - der Änderung der Drehzahl eines angetriebenen Rads und
   - des durchschnittlichen Gesamtdrehmoments

erfolgt und eine Schlupfkennzahl (SK) in Abhängigkeit der erfassten Größen berechnet wird, wobei die Regelung der Antriebseinheit abhängig von der Schlupfkennzahl (SK) erfolgt.

10. Verfahren nach Anspruch 9, **dadurch gekennzeichnet, dass** die Steigung und/oder der Untergrundbeschaffenheit erfasst wird und die Schlupfkennzahl (SK) abhängig von der erfassten Steigung und/oder Untergrundbeschaffenheit bestimmt wird.

11. Verfahren nach Anspruch 9 oder 10, **dadurch gekennzeichnet, dass** die Schlupfkennzahl (SK) angepasst wird, falls trotz der nachfolgenden Regelung ein erhöhter Schlupfzustand festgestellt wird, indem dieSchlupfkennzahl (SK)mit einem Faktor kleiner als 1 multipliziert wird..

12. Verfahren nach einem der Ansprüche 1 bis 11, **dadurch gekennzeichnet, dass** die Summe (610) aus Pedaldrehmoment (620) und Motordrehmoment (640) geregelt wird, indem das Motordrehmoment (640) antizyklisch zu dem Pedaldrehmoment (620) geregelt wird

**13.** Verfahren nach Anspruch 12, **dadurch gekennzeichnet, dass** die Summe (810) aus Pedaldrehmoment (820) und Motordrehmoment (840) derart geregelt wird, dass bei einem erhöhten Pedaldrehmoment (812) von dem Motor ein negatives Motordrehmoment (842) ausgeübt wird.

**14.** Verfahren nach einem der Ansprüche 1 bis 13, **dadurch gekennzeichnet, dass** der Pedalantrieb eine automatische Gangschaltung umfasst, wobei insbesondere in einem erhöhten Schlupfzustand, die automatische Gangschaltung derart geregelt wird (950), dass Schwankungen des Gesamtdrehmoments ausgeglichen werden.

**15.** Regelungsvorrichtung (24) für ein pedalgetriebenes Fahrzeug (1) mit einer Antriebseinheit (12), umfassend einen Pedalantrieb (25) und einen Motor (10), **dadurch gekennzeichnet, dass** die Regelungsvorrichtung (24) eingerichtet ist, das Motordrehmoment und das Pedaldrehmoment und eine Schlupfgröße zu erfassen, und die Antriebseinheit (12) derart zu regeln, dass die Summe aus Pedaldrehmoment und Motordrehmoment abhängig von der Schlupfgröße durch ein Verfahren nach den Ansprüchen 1 bis 14 anpassbar ist,.

**16.** Fahrzeug (1) umfassend einen Pedalantrieb (25) und einem Motor (10) als Unterstützungsantrieb und eine Regelungsvorrichtung (24) nach Anspruch 15.

**17.** Pedalgetriebenes Fahrzeug (1) nach Anspruch 16, umfassend einen oder mehrere Sensoren (15, 16, 17, 18) zur Erfassung des Motordrehmoments und/oder der Pedaldrehzahl und/oder des Pedaldrehmoments und/oder der Beschleunigung in Fahrtrichtung und/oder des Gesamtdrehmoments und/oder der Drehzahl eines angetriebenen Rads (27), wobei die erfassten Sensorsignale der Regelvorrichtung (24) zugeführt werden.

**18.** Pedalgetriebenes Fahrzeug nach Anspruch 16 oder 17, umfassend einen oder mehrere Sensoren (21) zur Erfassung der Untergrundbeschaffenheit, insbesondere einen Neigungssensor.

**19.** Pedalgetriebenes Fahrzeug (1) nach einem der Ansprüche 16 bis 18, wobei der Pedalantrieb eine automatische Gangschaltung umfasst, die durch die Regelungsvorrichtung (24) regelbar ausgebildet ist.

**Claims**

**1.** Method for controlling a pedal-driven vehicle (1) with a drive unit (12), comprising a pedal drive (25) and a motor (10) as an assistance drive, having the following steps:

- detecting a slip variable as a function of the rotational speed of a driven wheel,
- detecting the motor torque (640, 840),
- detecting the pedal torque (620, 820),
- controlling the drive unit as a function of the detected slip variable, wherein there is provision that the sum (610, 810) of the motor torque and pedal torque is controlled as a function of the detected slipping variable,

**characterized in that** the sum (610, 810) of the motor torque (640, 840) and the pedal torque (620, 820) is controlled in such a way that in particular when an increased slipping state is present, torque peaks (612, 812) are compensated.

**2.** Method according to Claim 1, **characterized in that** the slip variable by detecting the pedal rotational speed (n) as a variable which determines the rotational speed of the driven wheel, and a change in the pedal rotational speed ($\Delta n$) is determined ($\dot{n}$) in a predefined time interval ($\Delta t$).

**3.** Method according to Claim 1, **characterized in that** the slip variable is detected by directly measuring a change in the pedal rotational speed via a rotational rate sensor (Gyro) at one wheel.

**4.** Method according to one of Claims 1 to 3, **characterized in that** the slip variable is detected by detecting the motor rotational speed ($n_{mot}$) as a variable which is dependent on the rotational speed of the driven wheel, and a change in the motor rotational speed ($\Delta n_{mot}$) is determined ($\dot{n}_{mot}$) in a predefined time interval ($\Delta t$).

**5.** Method according to one of Claims 1 to 4, **characterized in that** in a further step (120, 320) a comparison of the slip variable with a threshold value ($S_P$) is provided, wherein a slipping state of a driven wheel is detected as a function of the comparison, wherein an increased slipping state is detected in particular when the threshold value ($S_P$) is exceeded, and otherwise a normal slipping state is detected.

6. Method according to Claim 5, **characterized in that** the drive unit (12), in particular the pedal drive (25) and/or the motor (10), has a transmission, and the threshold value ($S_P$) is defined as a function of a transmission position.

7. Method according to one of Claims 5 or 6, **characterized in that** the detection of an increased slipping state comprises a plausibility-checking step (130, 330).

8. Method according to Claim 7, **characterized in that** a detection

   - of the pedal torque profile (220) and/or
   - of the acceleration (420) of the vehicle in the direction of travel

   is provided in the plausibility-checking step (130, 330).

9. Method according to one of Claims 5 to 8, **characterized in that** when an increased slipping state is detected, detection takes place of

   - the change in the pedal rotational speed and/or
   - the change in rotational speed of a driven wheel and
   - of the average overall torque,

   and a slip coefficient (SK) is calculated as a function of the detected variables, wherein the drive unit is controlled as a function of the slip coefficient (SK).

10. Method according to Claim 9, **characterized in that** the gradient and/or the quality of the underlying surface are/is detected and the slip coefficient (SK) is determined as a function of the detected gradient and/or quality of the underlying surface.

11. Method according to Claim 9 or 10, **characterized in that** the slip coefficient (SK) is adapted if, despite the subsequent control, an increased slipping state is detected **in that** the slip coefficient (SK) is multiplied by a factor which is less than 1.

12. Method according to one of Claims 1 to 11, **characterized in that** the sum (610) of the pedal torque (620) and the torque (640) is controlled by controlling the motor torque (640) anti-cyclically with respect to the pedal torque (620).

13. Method according to Claim 12, **characterized in that** the sum (810) of the pedal torque (820) and the motor torque (840) is controlled in such a way that in the case of an increased pedal torque (812) a negative motor torque (842) is applied by the motor.

14. Method according to one of Claims 1 to 13, **characterized in that** the pedal drive comprises an automatic gear shift, wherein, in particular in an increased slipping state, the automatic gear shift is controlled (950) in such a way that fluctuations in the overall torque are compensated.

15. Control device (24) for a pedal-driven vehicle (1) with a drive unit (12), comprising a pedal drive (25) and a motor (10), **characterized in that** the control device (24) is configured to detect the motor torque and the pedal torque and a slip variable, and to control the drive unit (12) in such a way that the sum of the pedal torque and motor torque can be adapted as a function of the slip variable by means of a method according to Claims 1 to 14.

16. Vehicle (1) comprising a pedal drive (25) and a motor (10) as an assistance drive and a control device (24) according to Claim 15.

17. Pedal-driven vehicle (1) according to Claim 16, comprising one or more sensors (15, 16, 17, 18) for detecting the motor torque and/or the pedal rotational speed and/or the pedal torque and/or the acceleration in the direction of travel and/or the overall torque and/or the rotational speed of a driven wheel (27), wherein the detected sensor signals are fed to the control device (24).

18. Pedal-driven vehicle according to Claim 16 or 17, comprising one or more sensors (21) for detecting the quality of the underlying surface, in particular an inclination sensor.

**19.** Pedal-driven vehicle (1) according to one of Claims 16 to 18, wherein the pedal drive comprises an automatic gear shift which is designed so as to be controllable by means of the control device (24).

**Revendications**

**1.** Procédé de commande d'un véhicule entraîné par pédale (1) comportant une unité d'entraînement (12), comprenant un entraînement par pédale (25) et un moteur (10) en tant qu'entraînement d'assistance, comportant les étapes consistant à :

- détecter une valeur de patinage en fonction de la vitesse de rotation d'une roue entraînée,
- détecter un couple de rotation de moteur (640, 840),
- détecter le couple de rotation de pédale (620, 820),
- commander l'unité d'entraînement en fonction de la grandeur de patinage détectée, dans lequel il est fait en sorte que la somme (610, 810) du couple de rotation de moteur et du couple de rotation de pédale soit commandée en fonction de la grandeur de patinage détectée,

caractérisé en ce que la somme (610, 810) du couple de rotation de moteur (640, 840) et du couple de rotation de pédale (620, 820) est commandée de manière à équilibrer les pics de couple de rotation (612, 812), notamment en cas d'augmentation de l'état de patinage plous élevé.

**2.** Procédé selon la revendication 1, caractérisé en ce que la grandeur de patinage est détectée en détectant en tant que grandeur ($\dot{n}$) déterminant la vitesse de rotation de la roue entraînée, la vitesse de rotation de pédale (n) et une variation de la vitesse de rotation de pédale ($\Delta n$) au cours d'un intervalle de temps prédéfini ($\Delta t$).

**3.** Procédé selon la revendication 1, caractérisé en ce que la grandeur de patinage est détectée en mesurant directement sur une roue une variation de la vitesse de rotation de pédale au moyen d'un capteur de vitesse de rotation de pédale (Gyro).

**4.** Procédé selon l'une quelconque des revendications 1 à 3, caractérisé en ce que la grandeur de patinage est détectée en détectant en tant que grandeur ($\dot{n}_{mot}$) dépendant de la vitesse de rotation de la roue entraînée, la vitesse de rotation de moteur ($n_{mot}$), et en déterminant une variation de la vitesse de rotation de moteur ($\Delta n_{mot}$) au cours d'un intervalle de temps prédéfini ($\Delta t$).

**5.** Procédé selon l'une quelconque des revendications 1 à 4, caractérisé en ce que, lors d'une étape supplémentaire (120, 320), une comparaison de la grandeur de patinage à une valeur de seuil ($S_P$) est effectuée, dans lequel un état de patinage d'une roue entrainée est déterminé en fonction de la comparaison, dans lequel une augmentation de l'état de patinage est détectée, notamment lors d'un dépassement de la valeur de seuil ($S_P$), et dans le cas contraire, un état de patinage normal est déterminé.

**6.** Procédé selon la revendication 5, caractérisé en ce que l'unité d'entraînement (12), notamment l'entrainement par pédale (25) et/ou le moteur (10), comporte une boîte de vitesse et en ce que la valeur de seuil ($S_P$) est établie en fonction d'un réglage de rapport de vitesse.

**7.** Procédé selon l'une quelconque des revendications 5 ou 6, caractérisé en ce que la détection d'une augmentation de l'état de patinage comprend une étape de détermination de vraisemblance (130, 330).

**8.** Procédé selon la revendication 7, caractérisé en ce que, lors de l'étape de détermination de vraisemblance (130, 330), une détection

- du profil de copule de rotation de pédale (220) et/ou
- de l'accélération (420) du véhicule, est effectuée dans la direction de déplacement.

**9.** Procédé selon l'une quelconque des revendications 5 à 8, caractérisé en ce que, lorsqu'une augmentation de l'état de patinage est déterminée, une détection

- de la variation de la vitesse de rotation de pédale et/ou
- de la variation de la vitesse de rotation d'une roue entraînée et

    - du couple de rotation total moyen

est effectuée et **en ce qu'**un indice de patinage (SK) est calculé en fonction des grandeurs détectées, dans lequel la commande de l'unité d'entraînement est effectuée en fonction de l'indice de patinage (SK).

10. Procédé selon la revendication 9, **caractérisé en ce que** la pente et/ou la nature du sous-sol est détectée et **en ce que** l'indice de patinage (SK) est déterminé en fonction de l'augmentation détectée et/ou de la nature détectée du sous-sol.

11. Procédé selon la revendication 9 ou 10, **caractérisé en ce que** l'indice de patinage (SK) est ajusté dans le cas où, malgré la commande effectuée conformément à celui-ci, une augmentation de l'état de patinage est déterminée, en multipliant l'indice de patinage (SK) par un facteur inférieur à 1.

12. Procédé selon l'une quelconque des revendications 1 à 11, **caractérisé en ce que** la somme (610) du couple de rotation de pédale (620) et du couple de rotation de moteur (640) est commandée en commandant le couple de rotation de moteur (640) de manière anticyclique par rapport au couple de rotation de pédale (620).

13. Procédé selon la revendication 12, **caractérisé en ce que** la somme (810) du couple de rotation de pédale (820) et du couple de rotation de moteur (840) est commandée de manière à ce que, lorsque le couple de rotation de pédale (812) augmente, un couple de rotation de moteur négatif (842) soit exercé par le moteur.

14. Procédé selon l'une quelconque des revendications 1 à 13, **caractérisé en ce que** l'entraînement par pédale comprend un changement de vitesse automatique, dans lequel le changement de vitesse automatique est commandé (950), notamment lors de l'augmentation de l'état de patinage, de manière à équilibrer le fluctuations du couple de rotation total.

15. Dispositif de commande (24) destiné à un véhicule entraîné par pédale (1) comportant une unité d'entraînement (12), comprenant un entraînement par pédale (25) et un moteur (10), **caractérisé en ce que** le dispositif de commande (24) est conçu pour détecter le couple de rotation de moteur et le couple de rotation de pédale ainsi qu'une grandeur de patinage, et pour commander l'unité d'entraînement (12) de manière à ce que la somme du couple de rotation de pédale et du couple de rotation de moteur puisse être ajustée en fonction de la grandeur de patinage conformément à un procédé selon les revendications 1 à 14.

16. Véhicule (1) comprenant un entraînement par pédale (25) et un moteur (10) en tant qu'entraînement d'assistance et un dispositif de commande (24) selon la revendication 15.

17. Véhicule entraîné par pédale (1) selon la revendication 16, comprenant un ou plusieurs capteurs (15, 16, 17, 18) destinés à détecter le couple de rotation de moteur et/ou la vitesse de rotation de pédale et/ou le couple de rotation de pédale et/ou l'accélération dans la direction de déplacement et/ou le couple de rotation total et/ou le couple de rotation d'une roue (27) entraînée, dans lequel les signaux de capteur détectés sont délivrés au dispositif de commande (24).

18. Véhicule entraîné par pédale selon la revendication 16 ou 17, comprenant un ou plusieurs capteurs (21) destinés à détecter la nature du sous-sol, notamment un capteur d'inclinaison.

19. Véhicule entraîné par pédale (1) selon l'une quelconque des revendications 16 à 18, dans lequel l'entraînement par pédale comprend un changement de vitesse automatique qui est réalisé de manière à pouvoir être commandé par le dispositif de commande (24).

EP 2 650 202 B1

# Fig. 1

15

# Fig. 2
## a)

## b)

# Fig. 3

# Fig. 4

# Fig. 5

Fig. 6

a)

b)

# Fig. 7

Fig. 8

EP 2 650 202 B1

22

# Fig. 9

**Fig. 10**

a)

b)

EP 2 650 202 B1

**Fig. 11**

EP 2 650 202 B1

**IN DER BESCHREIBUNG AUFGEFÜHRTE DOKUMENTE**

**In der Beschreibung aufgeführte Patentdokumente**

- JP 2004142634 A
- JP 2004243921 A
- EP 2409886 A2
- JP 2004142634 B